# EUROPEAN PATENT SPECIFICATION

(11) **EP 3 124 788 B1**
(45) Date of publication and mention of the grant of the patent: **09.09.2020**
(21) Application number: 16181307.6
(22) Date of filing: 26.07.2016
(51) Int. Cl.: F03D 7/02, F03D 17/00

(54) **WIND POWER GENERATOR**
WINDKRAFTGENERATOR
GÉNÉRATEUR D'ÉNERGIE ÉOLIENNE

(30) Priority: 28.07.2015 JP 2015148216
(43) Date of publication of application: 01.02.2017
(73) Proprietor: Hitachi, Ltd., Tokyo 100-8280 (JP)
(72) Inventor: YU, Juhyun, Tokyo 100-8280 (JP); SAEKI, Mitsuru, Tokyo 100-8280 (JP); TOBINAGA, Ikuo, Tokyo 100-8280 (JP); KIYOKI, Souichiro, Tokyo 100-8280 (JP)
(74) Representative: MERH-IP Matias Erny Reichl Hoffmann Patentanwälte PartG mbB

(56) References cited:
- EP-A2- 2 280 191
- EP-A2- 2 535 570
- WO-A1-2012/000504
- JP-A- 2011 127 551
- US-A1- 2010 138 060
- US-A1- 2011 269 554

## Description

### BACKGROUND OF THE INVENTION

### FIELD OF THE INVENTION

The present invention relates to a wind power generator, and particularly to a countermeasure for trouble in a yaw driving unit.

### BACKGROUND ART

From viewpoints of securing stable energy resources and preventing global warming, introduction of wind power generation has been advanced. A wind power generator changes a position of a rotor supported by a nacelle in accordance with wind directions by using a yaw driving unit (hereinafter, also referred to as a yaw actuator) to change a position of the nacelle with respect to a tower.

In the wind power generator, yaw control is performed such that a rotational plane of the rotor is orthogonal to a direction of wind. Types thereof include an up-wind type in which power generation is performed while the rotor is positioned on a further upwind side beyond a tower and the nacelle and a down-wind type in which power generation is performed while the rotor is positioned on a further downwind side beyond the tower and the nacelle. Any of these types may cause a problem in changing the position of the rotor in accordance with wind directions if abnormality occurs in the yaw driving unit. Therefore, it is desirable to prepare for abnormality occurring in the yaw driving unit.

Here, backgrounds of this technical field are disclosed, for example, in JP-A-2011-226339 and JP-A-2013-83247. JP-A-2011-226339 discloses a driving unit for a windmill, which includes a notch portion provided in a drive force transmission path, as a path for transmitting drive force, from an output shaft to a pinion and provided as a disconnection mechanism for cutting the connection of the drive force transmission path when torque with a magnitude of equal to or greater than a predetermined magnitude acts.

JP-A-2013-83247 discloses a driving unit for a windmill, which includes an operation switching mechanism that switches operation states from a connection state of connecting a drive force transmission path to a connection releasing state of cutting and releasing the connection of the drive force transmission path when torque with a magnitude of equal to or greater than a predetermined magnitude acts and that becomes capable of returning to the connection state when the magnitude of the acting torque becomes less than the predetermined magnitude after the operation state is switched to the connection releasing state.

JP 2011 127551 A concerns a wind-powered generator apparatus including a tower, a nacelle, and the yaw control mechanism for yaw-turning the nacelle to the tower. The yaw control mechanism includes at least one electromagnetic brake generating braking force for stopping the yaw turning of the nacelle.

WO 2012/000504 A1 pertains to a rotational positioning system in a wind turbine comprising a driven part, a plurality of positioning drives coupled to the driven part, a plurality of sensors each arranged to sense a load parameter indicative of the load of the respective positioning drive, and a load controller connected to the plurality of sensors.

EP 2280191 A2 relates to a drive unit that has a hydraulic motor, a transmission and a drive shaft on which a pinion is arranged for driving the gear ring. A mechanical overload protection unit, e.g. slip clutch or disengaging clutch, is arranged between the transmission and the pinion.

US 2010/0138060 A1 is concerned with a system, a method, and an apparatus for monitoring and controlling a wind driven machine. The system includes a wind driven machine with at least one component. The system also includes at least one data collection module for collecting operating data from the at least one component and for providing the operating data to at least one data processing module.

### SUMMARY OF THE INVENTION

A wind power generator receives a large load from wind in such a case where a rotor receives crosswind. In order not to easily cause such a situation, it is desirable to be able to continue yaw control even if abnormality occurs in a yaw driving unit from a viewpoint of enhancing reliability.

Here, Both JP-A-2011-226339 and JP-A-2013-83247 disclose the driving unit for a windmill that includes a mechanism for cutting connection of the drive force transmission path when torque with a magnitude of equal to or greater than the predetermined magnitude acts. The mechanism is designed to naturally cause disconnection and switching by the acting torque itself when the torque of a magnitude of equal to or greater than the predetermined magnitude acts. Such a mechanism makes it possible to realize the above-described countermeasure for a failure with a simple structure. Here, it is necessary to intentionally provide a portion with low strength in order to reliably cause disconnection in a case of naturally causing disconnection by the acting torque itself. However, it is also assumed that a device used in a harsh environment over a long period of time, such as a wind power generator, deteriorates with the elapse of time. In a case of the mechanism of naturally repeating switching and returning, there is a possibility that returning without eliminating the factor of the abnormality promotes the abnormality, and it is preferable not to automatically cause the returning in order not to cause a degree of the abnormality to advance in some cases.

The invention was made in view of the above-described circumstances, and an object thereof is to provide a wind power generator capable of enhancing reliability.

In order to achieve the above-described object, a wind power generator according to the invention includes: a nacelle that supports a rotor rotating in response to wind; a tower that supports the nacelle in a rotatable manner; a plurality of yaw driving units that changes a position of the nacelle with respect to the tower; an abnormality detector that detects abnormality of at least one of the yaw driving units from among the plurality of yaw driving units; and a releasing unit that releases drive force from being transmitted to the yaw driving unit, in which the abnormality has been detected, in response to a command in a case where the abnormality detector detects an abnormality.

According to the invention, it is possible to provide a wind power generator capable of enhancing reliability.

### BRIEF DESCRIPTION OF THE DRAWINGS

Fig. 1 is a diagram illustrating a general view of a wind power generator according to an embodiment of the present invention;
Fig. 2 is a diagram illustrating a vicinity of a top portion of a tower of the wind power generator according to the embodiment of the present invention;
Fig. 3 is a diagram illustrating the vicinity of the top portion of the tower of the wind power generator according to the embodiment of the present invention;
Fig. 4A is a diagram illustrating a part of a yaw actuator of the wind power generator according to the embodiment of the present invention;
Fig. 4B is a diagram illustrating a part of the yaw actuator of the wind power generator according to the embodiment of the present invention;
Fig. 5A is a diagram illustrating a part of a gearbox of the wind power generator according to the embodiment of the present invention;
Fig. 5B is a diagram illustrating a stopper of the wind power generator according to the embodiment of the present invention;
Fig. 5C is a diagram illustrating the stopper of the wind power generator according to the embodiment of the present invention;
Fig. 6A is a diagram illustrating a part of a yaw actuator of a wind power generator according to an embodiment of the present invention;
Fig. 6B is a diagram illustrating a part of the yaw actuator of the wind power generator according to the embodiment of the present invention;
Fig. 7A is a diagram illustrating a part of a yaw actuator of a wind power generator according to an embodiment of the present invention;
Fig. 7B is a diagram illustrating a part of the yaw actuator of the wind power generator according to the embodiment of the present invention;
Fig. 8A is a diagram illustrating a part of a yaw actuator of a wind power generator according to an embodiment of the present invention;
Fig. 8B is a diagram illustrating a part of the yaw actuator of the wind power generator according to the embodiment of the present invention;
Fig. 9A is a diagram illustrating a part of a yaw actuator of a wind power generator according to an embodiment of the present invention;
Fig. 9B is a diagram illustrating a part of the yaw actuator of the wind power generator according to the embodiment of the present invention;
Fig. 10A is a diagram illustrating a part of a yaw actuator of a wind power generator according to an embodiment of the present invention;
Fig. 10B is a diagram illustrating a part of the yaw actuator of the wind power generator according to the embodiment of the present invention;

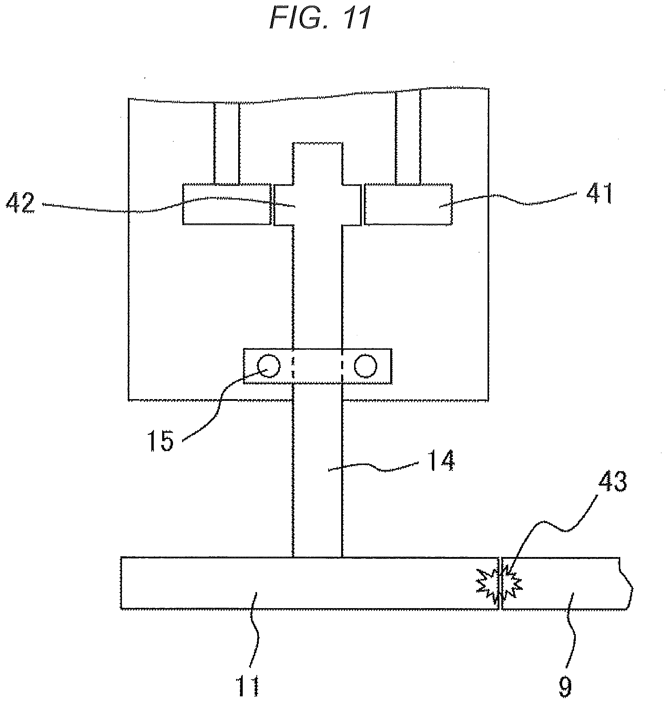

Fig. 11 is a diagram illustrating a part of a yaw actuator of a wind power generator in a related art; and
Fig. 12 is a diagram illustrating a brake mechanism in a yaw driving unit.

### DETAILED DESCRIPTION OF THE INVENTION

Hereinafter, a specific description will be given of embodiments of the present invention with reference to drawings. According to the respective embodiments, an abnormality detector detects abnormality, and drive force is released from being transmitted from a yaw actuator to a bearing provided at a tower or a nacelle by a releasing unit in response to a command even in a case where abnormality such as adhesion or sticking occurs in a yaw driving unit. In doing so, the yaw actuator in which the abnormality has occurred does not become an impediment of the following yaw driving of the wind power generator by releasing the drive force from being transmitted to the yaw actuator in which the abnormality has occurred. Thus, it is possible to further continue yaw control such as active drive and free yaw control that is passive to wind. That is, it is possible to continue the yaw control even if the abnormality occurs in the yaw actuator and to thereby enhance reliability by not receiving crosswind or the like that may be a factor of receiving a large load. If no crosswind is received, it is also possible to realize optimal design of reducing the load, for example, while maintaining necessary strength. In addition, it is possible to continue the yaw control, to thereby continue an operation even during repair or replacement, and to increase an operation rate of the wind power generator. This is further effective in a case where the wind power generator is installed on the ocean or in a mountainous area with low accessibility. In addition, it is obvious that states of the abnormality are not limited to adhesion or sticking.

In relation to the abnormality detector, the detection of a failure in a yaw actuator 10 including adhesion or sticking between a yaw bearing gear 9 and a pinion gear 11 can be performed by detecting a current flowing through a drive motor 13, for example, through a yaw inverter 50 provided in a control panel 8 or the like. Detection of the current flowing through the drive motor 13 includes detection of a current at the yaw inverter that controls the current flowing through the drive motor 13. At the time of a failure, the drive motor 13 of the yaw actuator 10 in which the failure has occurred generates different torque from that when the yaw actuator is in an ordinary state or from those of other normal yaw actuators. That is, it is possible to detect abnormality by detecting the current flowing through the drive motor 13, for example, by monitoring a rated current of the yaw inverter, or by setting a predetermined interlock value for a current value of the yaw inverter. Specifically, abnormality is considered to be detected if the current value of the yaw inverter exceeds the rated current or exceeds the predetermined interlock value, for example. The yaw inverter is provided for each yaw, actuator. It is a matter of course that this is an example of abnormality detection and any mechanism can be employed as long as the mechanism detects abnormality by mutually comparing changes in the yaw actuator itself before and after the failure or by mutually comparing the plurality of yaw actuators 10. If the abnormality detector detects abnormality, the releasing unit releases drive force from being transmitted to the yaw actuator from which the abnormality is detected, in response to a command. The command described herein can be made as a command issued by automatic control or as a command issued by manual control. As a subject issuing the command, it is a matter of course that the abnormality detector itself may issue the command, and a separate mechanism from the abnormality detector may also issue the command. The abnormality detector may be provided for each yaw actuator, or a single abnormality detector may be provided for a plurality of yaw actuators.

In relation to active control, drive force necessary for yaw control may be generated by normal yaw actuators (in other words, remaining yaw actuators that have not been released) after the release by the releasing unit. In such a case, it is considered to send output commands, the number of which has been increased in accordance with the number of normal yaw actuators, to the respective normal yaw driving units in conjunction with the release by the releasing unit.

The free yaw control of changing the positions of the nacelle 3 and the rotor with respect to the tower 4 in accordance with wind directions can be performed, for example, after the release by the releasing unit and in at least one of a case where a wind speed is equal to or greater than a predetermined wind speed (for example, a cut-out wind speed) and a case where power supply from a power system connected to the wind power generator is interrupted. It is effective to set the free yaw control for reducing a load at the time of storm wind when the wind speed is equal to or greater than the predetermined wind speed (for example, a cut-out wind speed) since excessive load is received from the wind. In addition, passive free yaw control is advantageous when power supply is interrupted since a power source for controlling the yaw actuators becomes insufficient. Both the active control and the passive free yaw control may be used in combination even after the release by the releasing unit. For example, it is also possible to perform the active control for a wind speed region of less than the predetermined wind speed such as a cut-out wind speed. In addition, it is possible to achieve the realization, simply by the yaw actuators (specifically, the drive motors 13 in the yaw actuators in this embodiment) performing a no-load operation at the time of the free yaw.

Various releasing units can be considered, and some of the releasing units will be described as embodiments in this specification. However, it is a matter of course that another unit can be used. Although a case where the release is performed by using a self-weight will be described in the respective embodiments, this is advantageous for contribution to implementation with a simple mechanism. Furthermore, this brings about an effect that the active returning cannot be performed from a viewpoint of preventing a serious accident. It is considered to release the drive force from being transmitted to the yaw actuator 10, from which the abnormality has been detected, until safeness is confirmed by repair, replacement, or the like and to return the transmission after the safeness is confirmed by the repair, the replacement, or the like. It is advantageous to guarantee not to return the transmission until the safeness is confirmed by the repair, replacement, or the like by a mechanical mechanism (such as a self-weight) or a control logic.

Furthermore, a case where the yaw actuator 10 is excluded from the yaw drive force transmission path by releasing the engagement between the pinion gear 11 and the bearing 9 will be exemplified in the respective embodiments, another portion may be employed as long as the portion is located from a member that causes the yaw drive force (for example, a yaw motor as an electric motor) to the bearing 9. In the following embodiments, specific examples of the releasing unit will mainly be described.

### First Embodiment

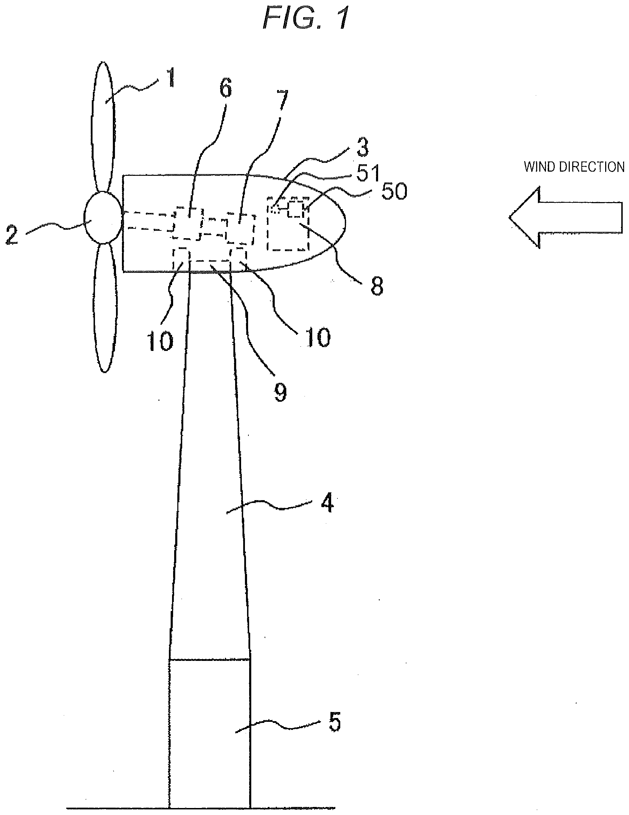

Fig. 1 is a diagram illustrating an entire configuration of a wind power generator according to an embodiment of the present invention. The wind power generator according to a first embodiment includes, as illustrated in Fig. 1, a foundation 5 disposed onshore or offshore and a nacelle 3 disposed on a tower 4 which is to be a supporting pillar of a power generator and including a step-up gear 6, the power generator 7, etc. inside thereof. A rotor formed of a hub 2 and a plurality of blades 1 is provided at an end of the nacelle 3. The rotor receives wind and converts the wind to rotational energy, and then transmits the rotational energy to the power generator 7 via the step-up gear 6 connected to the rotor, thereby generating power. Inside the nacelle 3, for example, a control panel 8 that includes control devices and instruments needed for controlling the wind power generator is also disposed.

A yaw bearing gear 9 and a plurality of yaw actuators 10 are disposed at a connecting portion between the tower 4 and the nacelle 3, and function as a yaw driving unit configured to control positions of the nacelle 3, the rotor, namely, the hub 2 and the plurality of blades 1 with respect to the tower 4. The position of the nacelle 3 with respect to the tower 4 is changed in accordance with directions of wind by cooperative operations of the plurality of yaw actuators 10. Fig. 1 is an example of a downwind wind power generator in which a rotor including the hub 2 and the plurality of blades 1 is disposed at an end portion of the nacelle 3 on a downwind side. Since force directed toward the downwind side like a weathercock is applied to the rotor by the wind, the downwind type in which the rotor is arranged on the further downwind side beyond the nacelle 3 and the tower 4 is advantageous in that it is possible to reduce a load received from the wind as compared with the upwind type. That is, the downwind type can be designed so as to be resistant to such a reduced load as compared with the upwind type, and it is possible to essentially expect that the wind power generator is formed with a further simplified structure.

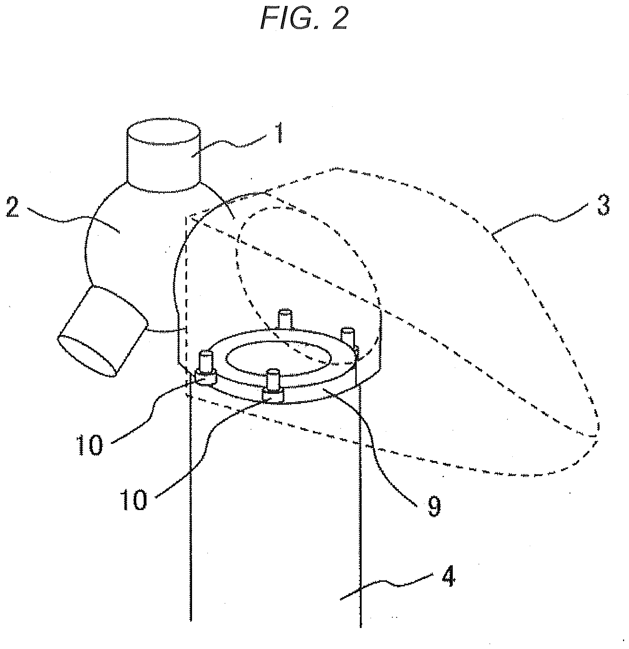

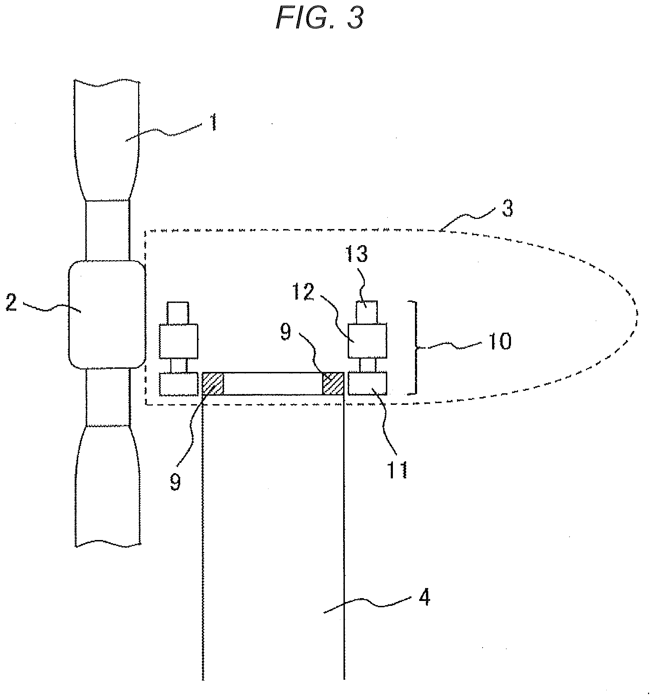

Figs. 2 and 3 are diagrams illustrating a vicinity of a top portion of the tower 4 of the wind power generator according to the embodiment of the present invention. In Figs. 2 and 3, the nacelle 3 is illustrated in a transparent view such that a state in the vicinity of the top portion of the tower 4 can be easily grasped. The yaw bearing gear 9 constituting a part of the yaw driving unit is provided at the top portion of the tower 4. A plurality of the yaw actuators 10 constituting a part of the yaw driving unit is provided at the nacelle 3. The number of yaw actuators 10 to be installed is depending on a type and a size of the wind power generator. For instance, in the case where a power generation amount (output) is approximately 2 MW, four yaw actuators are installed, and in the case where the power generation amount is approximately 5 MW, eight yaw actuators are installed so as to surround the top portion of the tower 4.

As illustrated in Fig. 3, the yaw actuator 10 is formed by joining a drive motor 13 which is to be a power source for yaw driving (yaw turning), a gearbox (transmission) 12 that transmits drive force of the drive motor 13 to a pinion gear 11, and the pinion gear 11 disposed so as to be engaged with the yaw bearing gear 9.

The wind power generator according to the first embodiment is configured as described above. The plurality of yaw actuators 10 are driven thereby controlling the positions of the nacelle 3 and the rotor with respect to the tower 4 such that the rotor, namely, the hub 2 and the plurality of blades 1 receive wind at a maximum. Further, the positions of the nacelle 3 and the rotor with respect to the tower 4 are controlled by a control device, such as a yaw inverter 50 at the control panel 8, based on data from an anemoscope or the like set at the wind power generator. A current detector 51 is connected to the yaw inverter 50. Although a case where current detection of the yaw inverter 50 is performed will be exemplified in the following respective embodiments, a target of the current detection and a method of abnormality detection (an example of current detection will be described in the respective embodiments) are not limited thereto. Although the yaw inverter is accommodated in the control panel 8 in this embodiment, an installation location is not limited thereto.

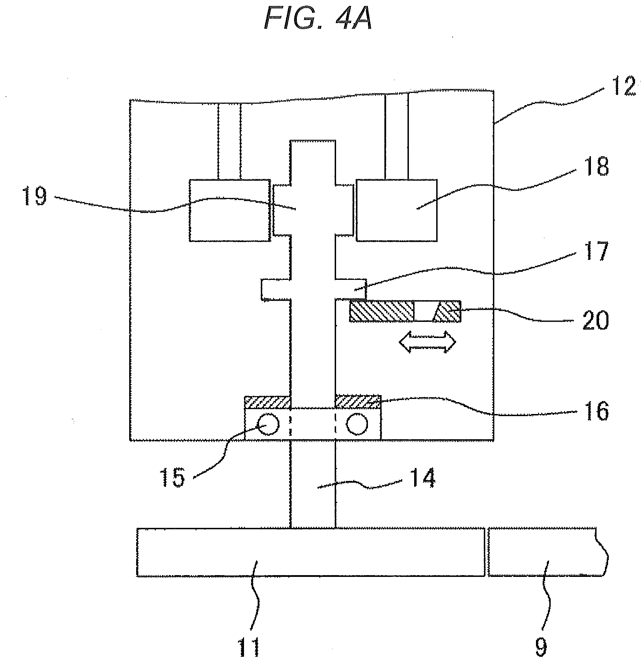

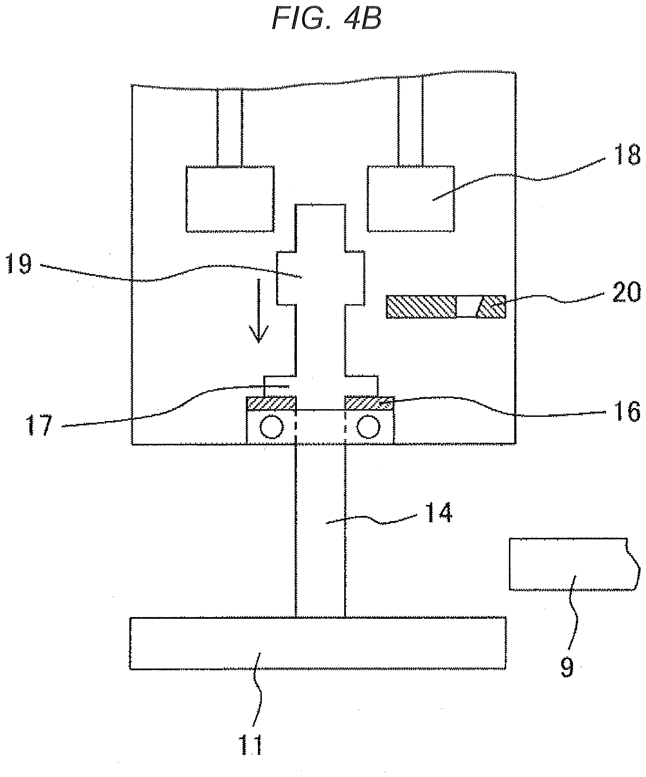

Functions and effects of the yaw actuator 10 according to the first embodiment will be described in detail, using Figs. 4A and 4B. Figs. 4A and 4B are diagrams illustrating a part of the gearbox (transmission) 12 constituting the yaw actuator 10. The gearbox 12 includes combinations of gears of plural stages, namely, engagement portions of the gears, and Figs. 4A and 4B show a state of the engagement portions of the gears located close to a side of the engagement portion between the pinion gear 11 and the yaw bearing gear 9 (in other words, gears on a side closer to an output shaft) out of the engagement portions of the gears of plural stages included inside the gearbox 12.

The gearbox 12 according to the first embodiment includes an output shaft 14 connected to the pinion gear 11, and the pinion gear 11 is engaged with the yaw bearing gear 9 as illustrated in Fig. 4A. A bearing 15 receiving the output shaft 14 is disposed inside the gearbox 12, and a sealing member 16 is disposed so as to contact the bearing 15. Here, oil is charged inside the gearbox 12, and the oil is prevented from leaking outside the gearbox 12 by the sealing member 16. The output shaft 14 includes a gear 19 on an opposite side of the portion connected to the pinion gear, and yaw drive force from the above-described drive motor 13 is transmitted from a gear 18, and transmitted to the pinion gear 11 via the output shaft 14.

A projection which is to be a supporting portion 17 is formed on the output shaft 14 inside the gearbox 12, and is supported by a stopper 20. The gear 18 is engaged with the gear 19, and yaw drive force from the drive motor 13 is transmitted to the pinion gear 11 via the output shaft 14 by the stopper 20 thus supporting the supporting portion 17 disposed at the output shaft 14. By this, the drive motor 13 is driven in accordance with wind directions, and the positions of the nacelle 3 and the rotor with respect to the tower 4 can be changed.

Meanwhile, as described above, in the case where adhesion or sticking occurs between the yaw bearing gear 9 and the pinion gear 11 due to seizure, foreign matter biting between the yaw bearing gear 9 and the pinion gear 11, or deforming of a gear caused by a storm such as a typhoon, the yaw drive force of the drive motor 13 cannot be smoothly transmitted from the pinion gear 11 to the yaw bearing gear 9, and yaw control (active control or free yaw control) becomes impossible.

Both the upwind type and the downwind type are affected by the condition that the yaw control cannot be performed, and this is a serious situation for both the types. In contrast, this condition further greatly affects the downwind type. Although the downwind type in which the rotor is arranged on a further downwind side beyond the nacelle 3 and the tower 4 is advantageous in that it is possible to reduce the load received from wind as compared with the upwind type as described above, the advantage can be further reliably achieved since it is necessary to be able to continue the active control or the free yaw control even in a case where abnormality occurs in the yaw actuator. Specifically, in a case where the rotational plane of the rotor becomes substantially parallel to the wind direction, in other words, in a case where crosswind is received, a maximum load occurs in the wind power generator. In order not to meet such a condition, it is important to be able to continue the yaw control even if abnormality occurs in the yaw actuator for the design of reducing the load, for example. Although the advantage achieved by not receiving crosswind is common to the upwind type, a higher load reducing effect (in terms of a difference from the maximum load) is expected for the downwind type.

Therefore, according to the wind power generator of the first embodiment, in the case where abnormality such as adhesion or sticking occurs between the yaw bearing gear 9 and the pinion gear 11, the stopper 20 is moved so as to separate from the supporting portion 17 as illustrated in Fig. 4B, thereby causing the pinion gear 11, the output shaft 14, and the gear 19 to fall below the gearbox 12 by their own weights. At the time of falling, the sealing member 16 functions as a cushion material of the supporting portion 17. Engagement between the yaw bearing gear 9 and the pinion gear 11 is disengaged by this, and the yaw drive force is released from being transmitted from the pinion gear 11 to the yaw bearing gear 9. As a result, the yaw actuator 10 in which abnormality has occurred does not function as an impediment of the yaw driving in the wind power generator.

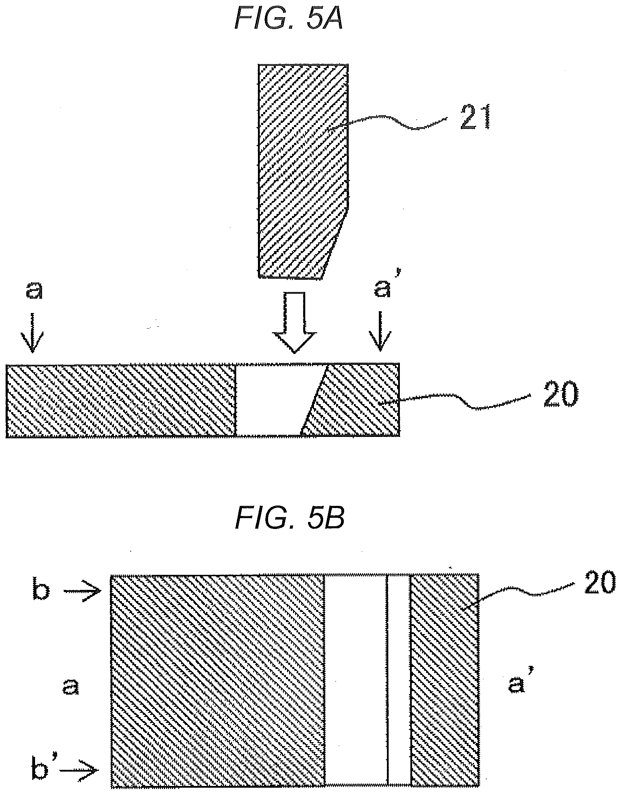

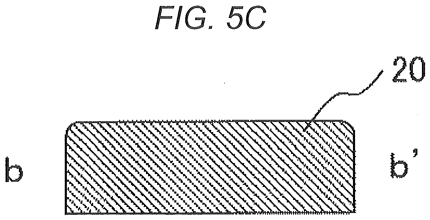

Operation of the above-described stopper 20 will be described, using Figs. 5A to 5C. As illustrated in Figs. 5A and 5B, an opening (notch) is provided in the stopper 20. In the case where abnormality such as adhesion or sticking occurs between the yaw bearing gear 9 and the pinion gear 11, a stopper releasing unit, such as a push stick 21, is inserted into the opening (notch) of the stopper 20, thereby moving the stopper 20 to separate from the supporting portion 17 and causing the pinion gear 11, the output shaft 14, and gear 19 to fall below the gearbox 12. In doing so, it is possible to release the engagement of the gear 19 that rotates along with the output shaft 14 in the gearbox 12. Fig. 5B is a plan view taken along a line a-a' in Fig. 5A. Also, Fig. 5C is a plan view taken along a line b-b' in Fig. 5B. As illustrated in Fig. 5C, the stopper 20 includes chamfered corners on a contacting surface with the supporting portion 17 so as to smoothly support the supporting portion 17.

A description will be given of the abnormality detector. As for a failure of the yaw actuator 10 including adhesion or sticking between the yaw bearing gear 9 and the pinion gear 11, it is possible to detect a current flowing through the drive motor 13 through the yaw inverter provided at the control panel 8, for example. The detection of the current flowing through the drive motor 13 includes detection of a current at the yaw inverter that controls the current flowing through the drive motor 13. At the time of a failure, the drive motor 13 in the yaw actuator 10 in which the failure has occurred generates different torque from that when the yaw actuator is normal or from those of other normal yaw actuators. That is, the current flowing through the drive motor 13 is detected by monitoring a rated current of the yaw inverter or setting a predetermined interlock value for a current value of the yaw inverter. If the current value of the yaw inverter exceeds the rated current or the predetermined interlock value, it is possible to detect abnormality. It is a matter of course that this is an example of abnormality detection, and any mechanism can be employed as long as the mechanism detects abnormality by mutually comparing changes in the yaw actuator itself before and after the failure or by mutually comparing the plurality of yaw actuators 10. If the abnormality detector detects abnormality, the releasing unit releases drive force from being transmitted to the yaw actuator from which the abnormality is detected, in response to a command. The command described herein can be made as a command issued by automatic control or as a command issued by manual control. The automatic control will be described in the embodiment shown below. As a command issued by the manual control, it is considered to release the support of the supporting portion 17 by the stopper 20 by manually inserting the above-described push stick 21 into the opening (notch) of the stopper 20 as described in this embodiment, for example. As a subject issuing the command, it is a matter of course that the abnormality detector itself may issue the command, and a separate mechanism from the abnormality detector may also issue the command.

Various releasing units can be considered, and some of the releasing units will be described as embodiments in this specification. However, it is a matter of course that another unit can be used. Although a case where the release is performed by using a self-weight will be mainly described in the respective embodiments, this is advantageous for contribution to implementation with a simple mechanism. Furthermore, this brings about an effect that the active returning cannot be performed from a viewpoint of preventing a serious accident. It is considered to release the drive force from being transmitted to the yaw actuator 10, from which the abnormality has been detected, until safeness is confirmed by repair, replacement, or the like and to return the transmission after the safeness is confirmed by the repair, the replacement, or the like. It is advantageous to guarantee not to return the transmission until the safeness is confirmed by the repair, replacement, or the like by a mechanical mechanism (such as a self-weight) or a control logic.

According to the wind power generator of the first embodiment, the abnormality detector detects abnormality, and the releasing unit releases the support of the supporting portion 17 by the stopper 20 in the gearbox 12 in response to a command even in a case where the abnormality, such as adhesion or sticking between the yaw bearing gear 9 and the pinion gear 11, namely adhesion or sticking of the yaw driving unit occurs. In doing so, the drive force is released from being transmitted to the yaw actuator in which the abnormality has occurred, and thereby not causing the yaw actuator in which the abnormality has occurred to become an impediment of the yaw driving in the wind power generator. Accordingly, it is possible to further continue yaw control such as active control and free yaw control that is passive to wind.

### Second Embodiment

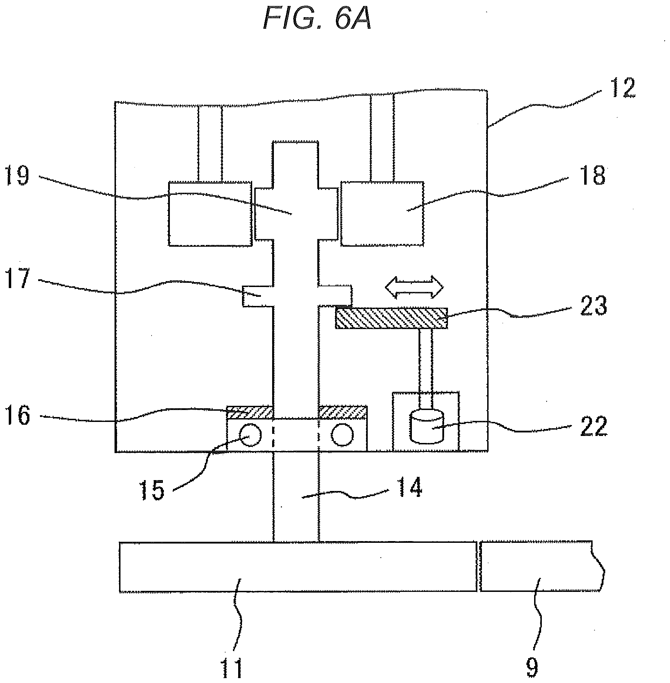

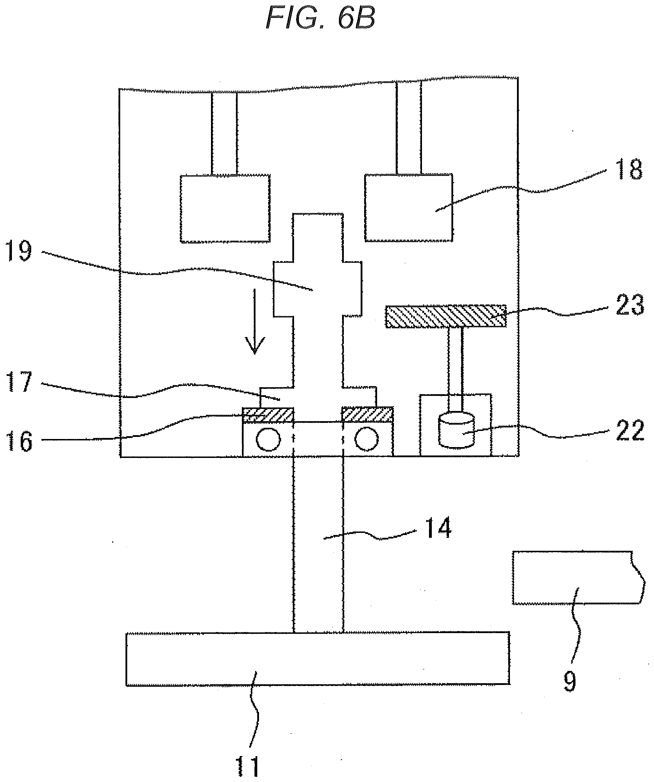

Figs. 6A and 6B are diagrams illustrating a part of a yaw actuator 10 in a wind power generator according to a different embodiment of the present invention. The wind power generator according to a second embodiment will be described, omitting a detailed description for portions common with portions described in a first embodiment.

A gearbox 12 constituting the yaw actuator 10 of the wind power generator according to the second embodiment has a configuration same as the first embodiment in a point that a projection to be a supporting portion 17 is provided at an output shaft 14. Further, another point same as the first embodiment is that a gear 18 and a gear 19 are engaged by the supporting portion 17 which is supported by a stopper 23, and yaw drive force from a drive motor 13 is transmitted to a pinion gear 11 via the output shaft 14.

A different point from the first embodiment is that the stopper 23 according to the second embodiment is connected to a drive motor 22, and an automatic releasing unit configured to release the yaw drive force from being transmitted, namely, the stopper 23 is moved by the drive motor 22 which is a releasing unit driving device such that the stopper 23 is automatically released from supporting the supporting portion 17. The stopper 23 is moved by the drive motor 22 so as to separate from the supporting portion 17, thereby causing the pinion gear 11, output shaft 14, and gear 19 to fall below the gearbox 12 by their own weights. Engagement between the yaw bearing gear 9 and the pinion gear 11 is disengaged by this, and the yaw drive force is released from being transmitted from the pinion gear 11 to the yaw bearing gear 9. As a result, the yaw actuator 10 in which the abnormality has occurred does not become an impediment of the yaw driving in the wind power generator. The abnormality detection can be performed in the same manner as in the first embodiment.

According to the wind power generator of the second embodiment, abnormality is detected in conjunction with the monitoring of the current value at the yaw inverter or the like, and the support of the supporting portion 17 by the stopper 23 in the gearbox 12 is automatically released even in a case where the abnormality, such as adhesion or sticking between the yaw bearing gear 9 and the pinion gear 11, namely adhesion or sticking of the yaw driving unit occurs, in the same manner as in the first embodiment. In doing so, the drive force is released from being transmitted to the yaw actuator in which the abnormality has occurred, and thereby not causing the yaw actuator in which the abnormality has occurred to become an impediment of the yaw driving in the wind power generator. Accordingly, it is possible to further continue yaw control such as active control and free yaw control that is passive to wind. In addition, the automatic releasing unit is not limited to the specific structure described in the embodiment.

### Third embodiment

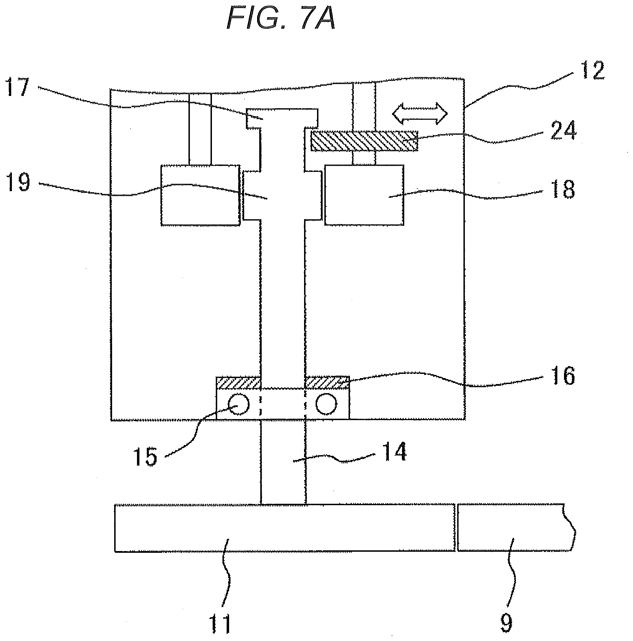

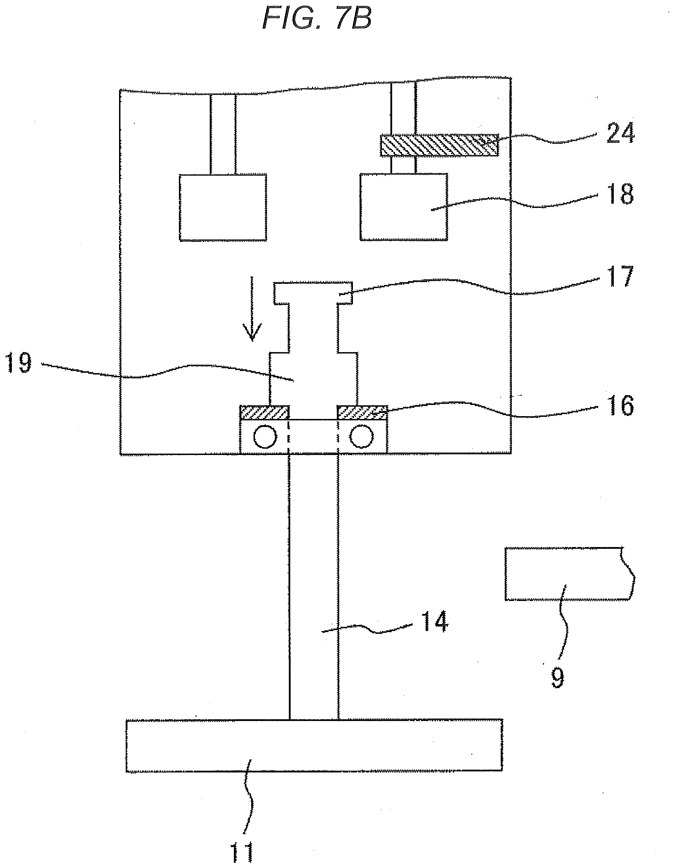

Figs. 7A and 7B are diagrams illustrating a part of a yaw actuator 10 in a wind power generator according to a different embodiment of the present invention. The wind power generator according to a third embodiment will be described, omitting a detailed description for portions common with portions described in a first embodiment.

A gearbox 12 constituting the yaw actuator 10 in the wind power generator according to the third embodiment has a configuration same as the first embodiment in a point that a projection which is to be a supporting portion 17 is provided at an output shaft 14. Also, an input shaft for inputting drive force to the gearbox 12 is provided though not shown in Figs. 7A and 7B. The input shaft will be described in the following embodiment. Further, another point same as the first embodiment is that a gear 18 and a gear 19 are engaged by the supporting portion 17 being supported by a stopper 24, and yaw drive force from a drive motor 13 is transmitted to a pinion gear 11 via the output shaft 14.

A point different from the first embodiment is that the supporting portion 17 and the stopper 24 according to the third embodiment are disposed, inside the gearbox 12, on a further input shaft side in the gearbox 12 beyond the respective gears 11 and 19 that rotate along with the output shaft 14. The stopper 24 is moved manually like the first embodiment or automatically by the drive motor like the second embodiment so as to separate from the supporting portion 17, thereby causing the pinion gear 11, output shaft 14, and a gear 19 to fall below the gearbox 12 by their own weights. Engagement between the yaw bearing gear 9 and the pinion gear 11 is disengaged by this, and the yaw drive force is released from being transmitted from the pinion gear 11 to the yaw bearing gear 9. As a result, the yaw actuator 10 in which the abnormality has occurred does not become an impediment of the yaw driving in the wind power generator. In doing so, the yaw actuator in which the abnormality has occurred does not become an impediment of the yaw driving in the wind power generator by releasing the drive force from being transmitted to the yaw actuator in which the abnormality has occurred. Accordingly, it is possible to further continue yaw control such as active control and free yaw control that is passive to wind.

### Fourth embodiment

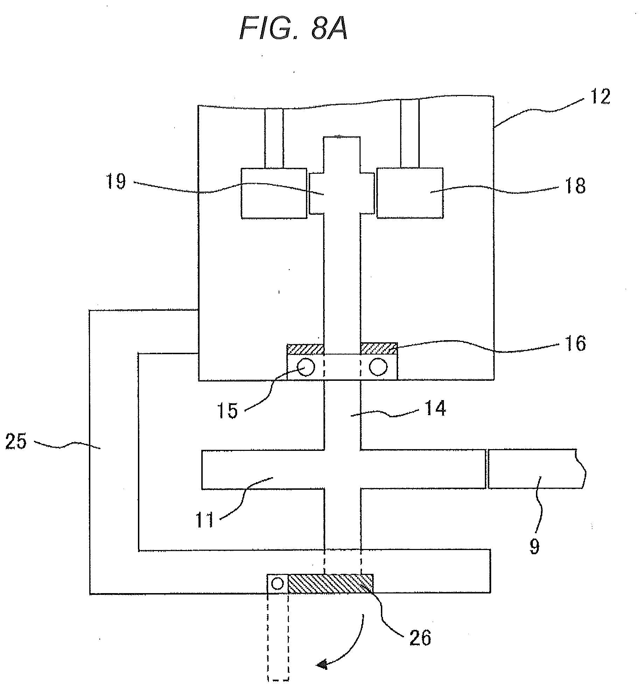

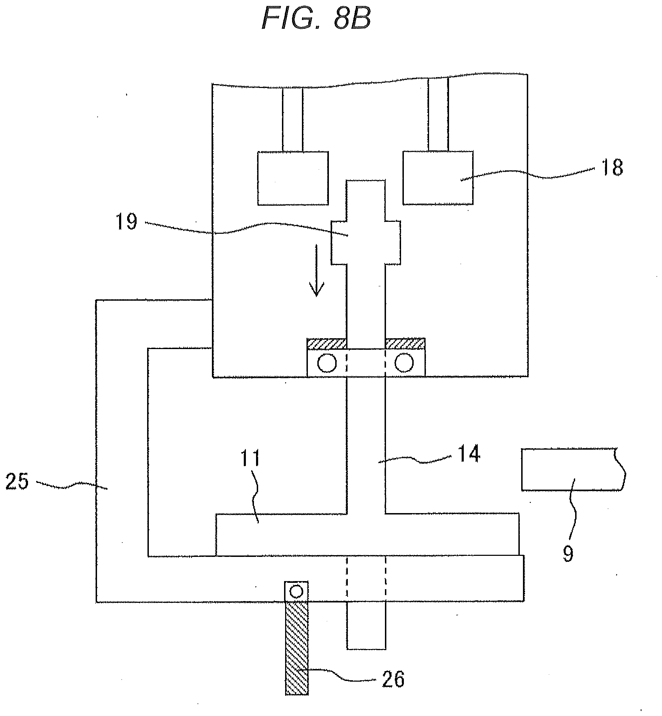

Figs. 8A and 8B are diagrams illustrating a part of a yaw actuator 10 in a wind power generator according to a different embodiment of the present invention. The wind power generator according to a fourth embodiment will be described, omitting a detailed description for portions common with portions described in a first embodiment.

The wind power generator according to the fourth embodiment is the same as the first embodiment in a point that a gearbox 12 includes engagement potions of gears of plural stages inside thereof. As for the gearbox 12 according to the fourth embodiment, a bracket 25 is provided outside thereof, and a stopper 26 is disposed at the bracket 25 so as to support the output shaft 14. In the case where abnormality such as adhesion or sticking occurs between a yaw bearing gear 9 and a pinion gear 11, the stopper 26 disposed outside the gearbox 12 is released, thereby causing the output shaft 14 to fall below the gearbox 12 passing through the bracket 25. Consequently, engagement between the pinion gear 11 and the yaw bearing gear 9 is disengaged and yaw drive force is released from being transmitted. As a result, the yaw actuator 10 in which the abnormality has occurred does not become an impediment of the yaw driving in the wind power generator. Although the gear provided at the output shaft 14 is exemplified herein, the same is true for any gear provided in the gearbox 12.

The stopper 26 disposed outside the gearbox 12 is released upon detection of abnormality such as adhesion or sticking between the yaw bearing gear 9 and the pinion gear 11 in the same manner as in the first embodiment. The abnormality detection can be performed in the same manner as in the first embodiment. The stopper 26 is released from supporting the output shaft 14 in response to a command, in the case where abnormality is detected. The stopper 26 is released manually like the first embodiment or automatically by a drive motor like the second embodiment. By releasing the stopper 26 from supporting the output shaft 14, the pinion gear 11, the output shaft 14, and a gear 19 fall below the gearbox 12 by their own weights.

Engagement between the yaw bearing gear 9 and the pinion gear 11 is disengaged by this, and the yaw drive force is released from being transmitted from the pinion gear 11 to the yaw bearing gear 9. As a result, the yaw actuator 10 in which the abnormality has occurred does not become an impediment of the yaw driving in the wind power generator. In doing so, the yaw actuator in which the abnormality has occurred does not become an impediment of the yaw driving in the wind power generator by releasing the drive force from being transmitted to the yaw actuator in which the abnormality has occurred. Accordingly, it is possible to further continue yaw control such as active control and free yaw control that is passive to wind.

### Fifth embodiment

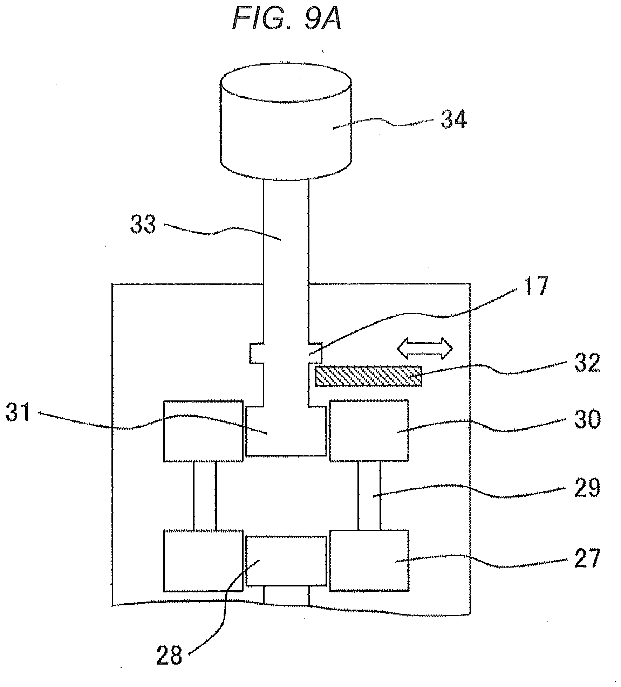

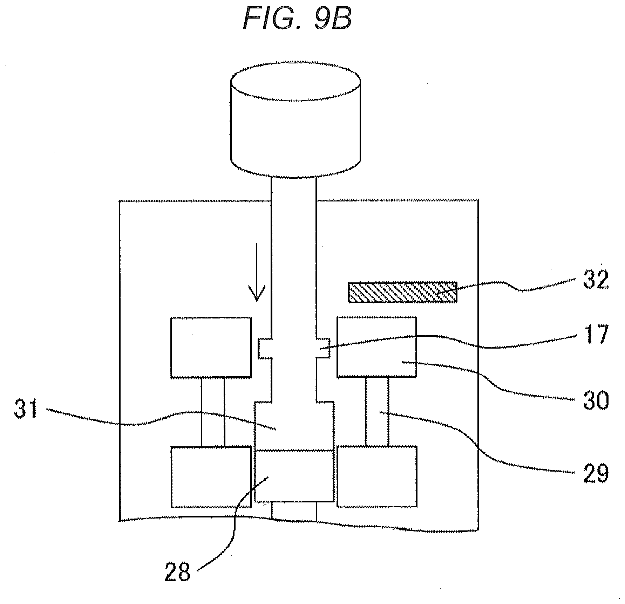

Figs. 9A and 9B are diagrams illustrating a part of a yaw actuator 10 in a wind power generator according to a different embodiment of the present invention. The wind power generator according to a fifth embodiment will be described, omitting a detailed description for portions common with portions described in a first embodiment.

A gearbox 12 constituting the yaw actuator 10 of the wind power generator according to the fifth embodiment is the same as the first embodiment in a point of including engagement potions of gears of plural stages inside thereof. The gearbox 12 according to the fifth embodiment is different from other embodiments in a point that a projection which is to be a supporting portion 17 and a stopper 32 are disposed at an input shaft 33. Yaw drive force is released from being transmitted by disengaging engagement of a gear 31 disposed on a side of a drive motor 34 (drive motor 13 in Fig. 3) inside the gearbox 12, in other words, the gear 31 that rotates along with the input shaft.

The stopper 32 is moved manually like the first embodiment or automatically by a drive motor like a second embodiment so as to separate from the supporting portion 17, thereby causing the input shaft 33 and a gear 31 to fall downward by their own weight. By this, engagement between a gear 30 and the gear 31 is disengaged, and the yaw drive force is released from being transmitted from the gear 31 to the gear 30.

The stopper 32 is released upon detecting abnormality such as adhesion or sticking between the yaw bearing gear 9 and the pinion gear 11 in the same manner as in the first embodiment. The abnormality detection can be performed in the same manner as in the first embodiment. The stopper 32 is released from supporting the supporting portion 17, namely, the input shaft 33 in response to a command in the case where the abnormality is detected. The stopper 32 is released manually like the first embodiment or automatically by a drive motor like a second embodiment. The input shaft 33 and the gear 31 fall downward by their own weights by releasing the stopper 32 from supporting the supporting portion 17.

By this, engagement between a gear 30 and the gear 31 is disengaged, and the yaw drive force is released from being transmitted from the gear 31 to the gear 30. As a result, the yaw actuator 10 in which the abnormality has occurred does not become an impediment of the yaw driving in the wind power generator. In doing so, the yaw actuator in which the abnormality has occurred does not become an impediment of the yaw driving in the wind power generator by releasing the drive force from being transmitted to the yaw actuator in which the abnormality has occurred. Accordingly, it is possible to further continue yaw control such as active control and free yaw control that is passive to wind.

### Sixth embodiment

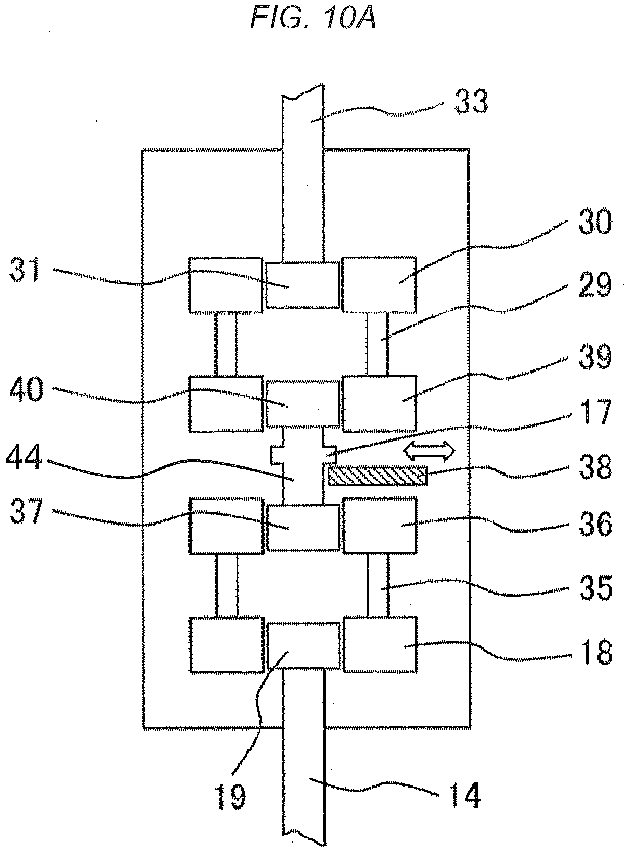

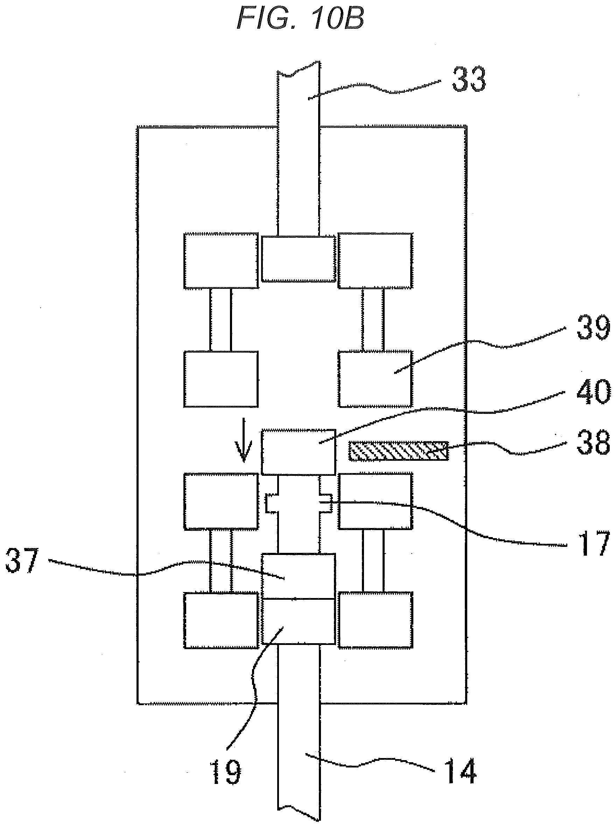

Figs. 10A and 10B are diagrams illustrating a part of a yaw actuator 10 in a wind power generator according to a different embodiment of the present invention. The wind power generator according to a sixth embodiment will be described, omitting a detailed description for portions common with portions described in a first embodiment.

A gearbox 12 constituting the yaw actuator 10 of the wind power generator according to the sixth embodiment is the same as the first embodiment in a point of including engagement potions of gears of plural stages inside thereof. According to the six embodiment, an intermediate shaft arranged between the input shaft 33 and the output shaft 14 is provided in addition to the input shaft 33 and the output shaft 14. According to the gearbox 12 of the sixth embodiment, yaw drive force is released from being transmitted by disengaging engagement of gears, which rotate along with the intermediate shaft, in the gearbox.

A projection to be a supporting portion 17 is disposed at a shaft (intermediate shaft) 44 portion that connects a gear 37 to a gear 40 positioned at the center portion of the gearbox 12, and is supported by a stopper 38. The stopper 38 is moved manually like the first embodiment or automatically by a drive motor like a second embodiment so as to separate from the supporting portion 17, thereby causing the gears 37, gear 40, and the shaft connecting these gears, which are positioned at the center portion of the gearbox 12, to fall downward by their own weights. By this, engagement between a gear 36 and the gear 37 and between a gear 39 and the gear 40 is disengaged, and yaw drive force from the gear 39 to the gear 40 and the yaw drive force from the gear 37 to the gear 36 are released from being transmitted.

The stopper 38 is released upon detecting abnormality such as adhesion or sticking between a yaw bearing gear 9 and a pinion gear 11 in the same manner as in the first embodiment. The abnormality detection can be performed in the same manner as in the first embodiment. The stopper 38 is released from supporting the supporting portion 17 disposed at the shaft portion connecting the gear 37 to the
gear 40 in response to a command in the case where the abnormality is detected.

As a result, the yaw actuator 10 in which the abnormality has occurred does not become an impediment of the yaw driving in the wind power generator. In doing so, the yaw actuator in which the abnormality has occurred does not become an impediment of the yaw driving in the wind power generator by releasing the drive force from being transmitted to the yaw actuator in which the abnormality has occurred. Accordingly, it is possible to further continue yaw control such as active control and free yaw control that is passive to wind.

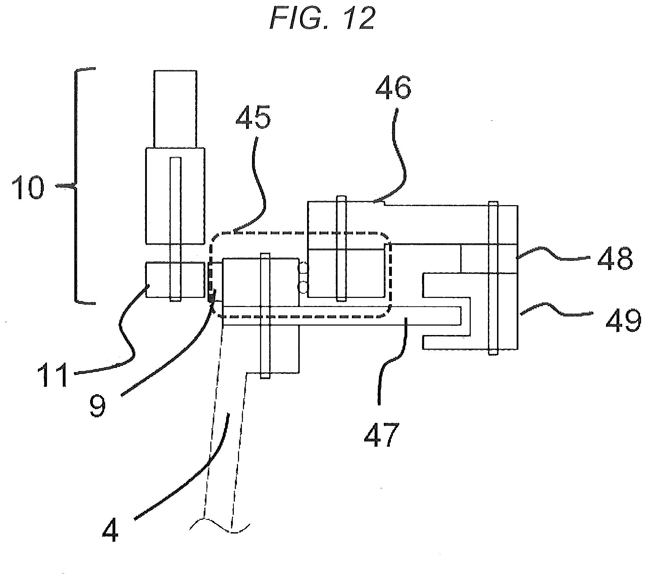

Fig. 12 illustrates a brake mechanism for yaw driving that can be applied to the above-described respective embodiments. An upper end portion of the tower 4 has a flange structure, and a swing bearing 45 is supported on the flange structure. In addition, a brake disk 47 is provided between the swing bearing 45 and the upper end portion of the tower 4. The swing bearing 45, the flange structure at the upper end portion of the tower 4, and the brake disk 47 are fastened with a bolt. The brake disk 47 and the brake 49 are provided outside the yaw actuator 10. A framework 46' that supports, for example, a drive train (not shown) for transmitting force to the power generator 7 is connected to the inner diameter side via a rolling element of the swing bearing 45 in the nacelle 3. A casing 48 is provided on a further inner side of the tower 4 beyond the swing bearing 45 and below the framework 46, and the brake 49 is connected to a lower portion of the casing 48. The framework 46, the casing 48, and the brake 49 are fastened with a bolt. In addition, the brake 49 has a structure of pinching the brake disk 47 in a vertical direction and can apply a brake in response to a brake command. The yaw driving can be stopped or decelerated in accordance with the strength of the brake.

In the case of free yaw, instantaneous changes in wind directions are immediately followed if no brake is provided. In such a case, excessive torque is generated in a drive force transmission unit, such as a yaw motor, in the yaw actuator 10, via the gearbox 12. Since such torque applies a burden on the yaw actuator 10, it is advantageous to decelerate or stop the yaw driving as needed so as not to cause instantaneous quick positional changes at the time of the free yaw.

## Claims

1. A wind power generator comprising:
a nacelle (3) that supports a rotor rotating in response to wind;
a tower (4) that supports the nacelle (3) in a rotatable manner;
a plurality of yaw driving units for changing a position of the nacelle (3) with respect to the tower (4);
an abnormality detector for detecting abnormality such as adhesion or sticking of at least one of the yaw driving units from among the plurality of yaw driving units; and
a releasing unit for releasing drive force from being transmitted to the yaw driving unit in which the abnormality has been detected in response to a command in a case where the abnormality detector detects an abnormality,
after the release by the releasing unit, normal yaw driving units are configured to generate drive force required for yaw control,
and output commands, the number of which is increased in accordance with the number of the normal yaw driving units, are configured to be sent to the respective normal yaw driving units, **characterized in that**
the nacelle (3) or the tower (4) includes a bearing (15);
the yaw driving units include pinion gears (11) that are configured to engage with the bearing (15); and
the releasing unit is configured to release the engagement between the pinion gear (11) and the bearing (15) in a case where the abnormality detector detects abnormality.

2. The wind power generator according to claim 1,
wherein after the release by the releasing unit and in at least one of a case where a wind speed is equal to or greater than a predetermined wind speed and a case where power supply from a power system connected to the wind power generator is interrupted, free yaw is configured to be set.

3. The wind power generator according to claim 2,
wherein during the free yaw, the yaw driving units are configured to perform a no-load operation.

4. The wind power generator according to claim 2 or 3, further comprising:
a brake (49) that stops or decelerates yaw driving,
wherein during the free yaw, the brake (49) stops or decelerates the yaw driving.

5. The wind power generator according to claim 4,
wherein the brake (49) is arranged outside the yaw driving units.

6. The wind power generator according to any one of claims 1 to 5,
wherein the yaw driving units are provided with electric motors, and
wherein the abnormality detector detects abnormality in the yaw driving units by detecting currents flowing through the electric motors.

7. The wind power generator according to claim 6, further comprising:
inverters that control the currents flowing through the electric motors,
wherein the abnormality detector detects abnormality in the yaw driving units by detecting currents in the inverters.

8. The wind power generator according to claim 1, further comprising:
a transmission that is connected to the pinion gears (11); and
an output shaft that outputs drive force from the transmission,
wherein inside the transmission, gears in a plurality of stages engage with each other, and
wherein the releasing unit releases the engagement of the gears that rotate along with the output shaft in the transmission.

9. The wind power generator according to claim 8, further comprising:
an input shaft (33) that inputs drive force to the transmission,
wherein the releasing unit is provided on a further input shaft side beyond the respective gears that rotate along with the output shaft in the transmission.

10. The wind power generator according to claim 1, further comprising:
a transmission that is connected to the pinion gears (11); and
an input shaft (33) that inputs drive force to the transmission, an output shaft that outputs the drive force from the transmission, and an intermediate shaft that is arranged between the input shaft and the output shaft,
wherein inside the transmission, gears in a plurality of stages engage with each other, and
wherein the releasing unit releases the engagement of the gears that rotate along with the intermediate shaft in the transmission.

11. The wind power generator according to claim 1, further comprising:
a transmission that is connected to the pinion gears (11); and
an input shaft (33) that inputs drive force to the transmission,
wherein inside the transmission, gears in a plurality of stages engage with each other, and
wherein the releasing unit releases the engagement of the gears that rotate along with the input shaft (33) in the transmission.

12. The wind power generator according to claim 1, further comprising:
a transmission that is connected to the pinion gears (11),
wherein the releasing unit is provided outside the transmission and releases the engagement of the gears in the transmission.

## Patentansprüche

1. Windkraftgenerator, umfassend:
ein Maschinenhaus (3), das einen Rotor trägt, der sich als Reaktion auf Wind dreht;
einen Turm (4), der das Maschinenhaus (3) drehbar trägt;
eine Mehrzahl von Gierantriebseinheiten zum Ändern einer Position des Maschinenhauses (3) in Bezug auf den Turm (4);
einen Unregelmäßigkeitsdetektor zum Erkennen von Unregelmäßigkeiten wie Adhäsion oder Kleben von mindestens einer der Gierantriebseinheiten aus der Vielzahl der Gierantriebseinheiten; und
eine Freigabeeinheit zum Freigeben der Antriebskraft von der Übertragung auf die Gierantriebseinheit, in der die Unregelmäßigkeit erkannt wurde, als Reaktion auf einen Befehl in einem Fall, in dem der Unregelmäßigkeitsdetektor eine Unregelmäßigkeit erkennt,
nach der Freigabe durch die Freigabeeinheit werden normale Gierantriebseinheiten konfiguriert, um die für die Giersteuerung erforderliche Antriebskraft zu erzeugen,
und Ausgabebefehle, deren Anzahl entsprechend der Anzahl des normalen Gierantriebs erhöht wird, die so konfiguriert sind, dass sie an die jeweiligen normalen Gierantriebseinheiten gesendet werden, **dadurch gekennzeichnet, dass**
das Maschinenhaus (3) oder der Turm (4) ein Lager (15) umfasst;
die Gierantriebseinheiten Ritzel (11) besitzen, die so konfiguriert sind, dass sie in das Lager (15) eingreifen; und
die Freigabeeinheit so konfiguriert ist, dass sie den Eingriff zwischen dem Ritzel (11) und dem Lager (15) in einem Fall freigibt, in dem der Unregelmäßigkeitsdetektor eine Unregelmäßigkeit erkennt.

2. Windkraftgenerator gemäß Anspruch 1,
wobei nach der Freigabe durch die Freigabeeinheit und in mindestens einem der Fälle, in denen eine Windgeschwindigkeit gleich oder größer als eine vorbestimmte Windgeschwindigkeit ist und in einem Fall, in dem die Stromversorgung von einem an den Windkraftgenerator angeschlossenes Stromnetz unterbrochen ist, das freie Gieren konfiguriert wird, um eingestellt zu werden.

3. Windkraftgenerator gemäß Anspruch 2,
wobei während des freien Gierens die Gierantriebseinheiten so konfiguriert sind, dass sie einen Leerlaufbetrieb durchführen.

4. Windkraftgenerator gemäß Anspruch 2 oder 3, weiter umfassend:
eine Bremse (49), die den Gierantrieb anhält oder verzögert,
wobei während des freien Gierens die Bremse (49) den Gierantrieb anhält oder verlangsamt.

5. Windkraftgenerator gemäß Anspruch 4,
wobei die Bremse (49) außerhalb der Gierantriebseinheiten angeordnet ist.

6. Windkraftgenerator gemäß einem der Ansprüche 1 bis 5,
wobei die Gierantriebseinheiten mit Elektromotoren versehen sind, und
wobei der Unregelmäßigkeitsdetektor eine Unregelmäßigkeit in den Gierantriebseinheiten durch Erkennen von Strömen, die durch die Elektromotoren fließen, erkennt.

7. Windkraftgenerator gemäß Anspruch 6, weiter umfassend:
Wechselrichter, die die durch die Elektromotoren fließenden Ströme steuern,
wobei der Unregelmäßigkeitsdetektor eine Unregelmäßigkeit in den Gierantriebseinheiten durch Erkennen von Strömen in den Wechselrichtern erkennt.

8. Windkraftgenerator gemäß Anspruch 1, weiter umfassend:
ein Getriebe, das mit den Ritzeln (11) verbunden ist; und
eine Antriebswelle, die die Antriebskraft vom Getriebe abgibt,
wobei innerhalb des Getriebes Zahnräder in mehreren Stufen miteinander in Eingriff stehen, und
wobei die Freigabeeinheit den Eingriff der Zahnräder freigibt, die sich zusammen mit der Antriebswelle im Getriebe drehen.

9. Windkraftgenerator gemäß Anspruch 1, weiter umfassend:
eine Eingangswelle (33), die Antriebskraft in das Getriebe einleitet,
wobei die Freigabeeinheit auf einer weiteren Eingangswellenseite jenseits der jeweiligen Zahnräder vorgesehen ist, die sich zusammen mit der Ausgangswelle im Getriebe drehen.

10. Windkraftgenerator gemäß Anspruch 1, weiter umfassend:
ein Getriebe, das mit den Ritzeln (11) verbunden ist; und
eine Eingangswelle (33), die die Antriebskraft in das Getriebe eingibt, eine Antriebswelle, die die Antriebskraft vom Getriebe abgibt, und eine Zwischenwelle, die zwischen der Eingangswelle und der Ausgangswelle angeordnet ist,
wobei innerhalb des Getriebes Zahnräder in mehreren Stufen miteinander in Eingriff stehen, und
wobei die Freigabeeinheit den Eingriff der Zahnräder, die sich zusammen mit der Zwischenwelle im Getriebe drehen, freigibt.

11. Windkraftgenerator gemäß Anspruch 1, weiter umfassend:
ein Getriebe, das mit den Ritzeln (11) verbunden ist; und
eine Eingangswelle (33), die die Antriebskraft in das Getriebe eingibt,
wobei innerhalb des Getriebes Zahnräder in mehreren Stufen miteinander in Eingriff stehen, und
wobei die Freigabeeinheit den Eingriff der Zahnräder freigibt, die sich zusammen mit der Eingangswelle (33) im Getriebe drehen.

12. Windkraftgenerator gemäß Anspruch 1, weiter umfassend:
ein Getriebe, das mit den Ritzeln (11) verbunden ist,
wobei die Auslöseeinheit außerhalb des Getriebes vorgesehen ist und das Einlegen der Zahnräder im Getriebe freigibt.

## Revendications

1. Aérogénérateur comprenant :
une nacelle (3) qui supporte un rotor tournant en réponse au vent ;
une tour (4) qui supporte la nacelle (3) de manière rotative ; une pluralité d'unités d'entraînement en lacet pour changer une position de la nacelle (3) par rapport à la tour (4) ;
un détecteur d'anomalie pour détecter une anomalie telle qu'une adhérence ou un collage d'au moins une des unités d'entraînement en lacet parmi la pluralité d'unités d'entraînement en lacet ; et
une unité de libération pour libérer la force d'entraînement de la transmission à l'unité d'entraînement en lacet dans laquelle l'anomalie a été détectée en réponse à une commande dans un cas où le détecteur d'anomalie détecte une anomalie, après la libération par l'unité de libération, des unités d'entraînement en lacet normales sont configurées pour générer la force d'entraînement requise pour la commande de lacet, des commandes de sortie, dont le nombre est augmenté en fonction du nombre d'unités d'entraînement en lacet normales, sont configurées pour être envoyées aux unités d'entraînement en lacet normales respectives, **caractérisé en ce que** ;
la nacelle (3) ou la tour (4) comprend un palier (15) ; les unités d'entraînement en lacet comprennent des pignons (11) qui sont configurés pour s'engager avec le palier (15) ; et l'unité de libération est configurée pour libérer l'engagement entre le pignon (11) et le palier (15) dans le cas où le détecteur d'anomalie détecterait une anomalie.

2. Aérogénérateur selon la revendication 1,
dans lequel, après la libération par l'unité de libération et dans au moins un des cas où une vitesse de vent est égale ou supérieure à une vitesse de vent prédéterminée et un cas où l'alimentation électrique à partir d'un système électrique connecté à l'aérogénérateur est interrompue, un lacet libre est configuré pour être réglé.

3. Aérogénérateur selon la revendication 2,
dans lequel pendant le lacet libre, les unités d'entraînement en lacet sont configurées pour effectuer une opération à vide.

4. Aérogénérateur selon la revendication 2 ou 3, comprenant en outre : un frein (49) qui arrête ou ralentit la conduite en lacet,
dans lequel pendant le lacet libre, le frein (49) arrête ou ralentit l'entraînement en lacet.

5. Aérogénérateur selon la revendication 4,
dans lequel le frein (49) est agencé àl'extérieur des unités d'entraînement en lacet.

6. Aérogénérateur selon l'une quelconque des revendications 1 à 5, dans lequel les unités d'entraînement en lacet sont pourvues de moteurs électriques, et dans lequel le détecteur d'anomalie détecte une anomalie dans les unités d'entraînement en lacet en détectant des courants circulant à travers les moteurs électriques.

7. Aérogénérateur selon la revendication 6, comprenant en outre : des onduleurs qui commandent les courants circulant à travers les moteurs électriques, dans lequel le détecteur d'anomalie détecte une anomalie dans les unités d'entraînement en lacet en détectant des courants dans les onduleurs.

8. Aérogénérateur selon la revendication 1, comprenant en outre: une transmission qui est connectée aux pignons (11) ; et
un arbre de sortie qui émet une force d'entraînement à partir de la transmission,
dans lequel à l'intérieur de la transmission, des engrenages dans une pluralité d'étages s'engagent les uns avec les autres, et
dans lequel l'unité de libération libère l'engagement des engrenages qui tournent avec l'arbre de sortie dans la transmission.
Aérogénérateur selon la revendication 8, comprenant en outre : 5 un arbre d'entrée (33) qui applique une force d'entraînement à la transmission,
dans lequel l'unité de libération étant prévue sur un autre côté de l'arbre d'entrée au-delà des engrenages respectifs qui tournent avec l'arbre de sortie dans la transmission.

9. Aérogénérateur selon la revendication 1, comprenant en outre : une transmission qui est connectée aux pignons (11) ; et un arbre d'entrée (33) qui entre une force d'entraînement dans la transmission, un arbre de sortie qui produit la force d'entraînement de la transmission, et un arbre intermédiaire qui est agencé entre l'arbre d'entrée et l'arbre de sortie,
dans lequel à l'intérieur de la transmission, des engrenages dans une pluralité d'étages s'engagent les uns avec les autres, et
dans lequel l'unité de libération libère l'engagement des engrenages qui tournent avec l'arbre intermédiaire dans la transmission.

10. Aérogénérateur selon la revendication 1, comprenant en outre : une transmission qui est connectée aux pignons (11) ; et un arbre d'entrée (33) qui entre une force d'entraînement dans la transmission, dans lequel à l'intérieur de la transmission, des engrenages dans une pluralité d'étages s'engagent les uns avec les autres, et dans lequel l'unité de libération libère l'engagement des engrenages qui tournent avec l'arbre d'entrée (33) dans la transmission.

11. Aérogénérateur selon la revendication 1, comprenant en outre une transmission qui est connectée aux pignons (11) ; et un arbre d'entrée (33) qui entre une force d'entraînement dans la transmission, dans lequel à l'intérieur de la transmission, des engrenages dans une pluralité d'étages s'engagent les uns avec les autres, et dans lequel l'unité de libération libère l'engagement des engrenages qui tournent avec l'arbre d'entrée (33) dans la transmission.

12. Le générateur d'énergie éolienne selon la revendication 1, comprenant en outre : une transmission qui est connectée au pignon (11), dans lequel l'unité de libération est prévue à l'extérieur de la transmission et libère l'engagement des engrenages dans la transmission.
